# EUROPÄISCHE PATENTSCHRIFT

(11) **EP 4 458 651 B1**
(45) Veröffentlichungstag und Bekanntmachung des Hinweises auf die Patenterteilung: **28.01.2026**
(21) Anmeldenummer: 24173218.9
(22) Anmeldetag: 30.04.2024
(51) Int. Cl.: B62D 15/02, B62D 5/04, G01B 9/00, G01B 11/00, G01D 5/347

(54) **LENKAKTUATOR FÜR EIN LENKSYSTEM EINES KRAFTFAHRZEUGS UND VERFAHREN ZUM BETRIEB EINES LENKAKTUATORS**
STEERING ACTUATOR FOR A STEERING SYSTEM OF A MOTOR VEHICLE AND METHOD FOR OPERATING A STEERING ACTUATOR
ACTIONNEUR DE DIRECTION POUR UN SYSTÈME DE DIRECTION D'UN VÉHICULE AUTOMOBILE ET PROCÉDÉ DE FONCTIONNEMENT D'UN ACTIONNEUR DE DIRECTION

(30) Priorität: 04.05.2023 BE 202305359
(43) Veröffentlichungstag der Anmeldung: 06.11.2024
(73) Patentinhaber: thyssenkrupp Presta AG, 9492 Eschen (LI); thyssenkrupp AG, 45143 Essen (DE)
(72) Erfinder: Mazza, Lukas, 9466 Sennwald (CH); Raither, Wolfram, 9475 Sevelen (CH)
(74) Vertreter: thyssenkrupp Intellectual Property GmbH

(56) Entgegenhaltungen:
- DE-A1- 102018 132 010
- DE-A1- 19 915 105
- US-A1- 2008 078 607

## Beschreibung

### Stand der Technik

Die Erfindung betrifft einen Lenkaktuator für ein Lenksystem eines Kraftfahrzeugs, umfassend eine translatorisch axial in ihrer Längsrichtung in einer Gleitbuchse verschiebbar gelagerte Aktuatorstange, eine Antriebseinrichtung, und eine zur Erfassung mindestens eines Aktuatorparameters ausgebildete Sensorvorrichtung. Weiterhin ist ein Verfahren zum Betrieb eines Lenkaktuators Gegenstand der Erfindung.

Ein Lenkaktuator dient in einem Kraftfahrzeug-Lenksystem zur Erzeugung des mechanischen Lenkeinschlags eines oder mehrerer lenkbarer Räder.

Ein gattungsgemäßer Lenkaktuator weist eine Aktuatorstange auf, die in ihrer Längsrichtung, auch als Achsrichtung bezeichnet, üblicherweise quer zur Fahrtrichtung relativ zur Fahrzeugkarosserie verstellbar ist. Die Aktuatorstange kann an die Achsschenkel der beiden lenkbaren Räder einer Fahrzeugachse angelenkt sein, und bei einer Einzelradlenkung entsprechend mit einem einzelnen lenkbaren Rad verbunden sein. Die translatorische Verschiebung der Aktuatorstange bewirkt einen Lenkeinschlag der lenkbaren Räder.

Das Dokument DE19915105A1 offenbart einen Lenkaktuator und ein Verfahren zu dessen Betrieb gemäß dem Oberbegriff der unabhängigen Ansprüche 1 bzw. 13.

Zur Erzeugung eines Lenkbefehls kann die Aktuatorstange mittels einer Antriebseinrichtung axial translatorisch verlagert werden. Diese kann eine manuelle Krafteinleitungsvorrichtung aufweisen, wie beispielsweise aus einer konventionellen Zahnstangenlenkung bekannt ist. Alternativ oder zusätzlich kann ein motorischer Antrieb oder Hilfskraftantrieb vorgesehen sein. Dieser umfasst eine Antriebseinrichtung mit einem elektrischen Motor, der über eine Krafteinleitungsvorrichtung, beispielsweise einen Zahnstangen- oder Spindeltrieb, eine axiale Lenk- bzw. Aktuatorkraft in die Aktuatorstange einkoppeln kann. Die Aktuatorstange ist axial verschiebar in einer Gleitbuchse gelagert, die in einem an der Fahrzeugkarosserie fixierten Gehäuse, dem Aktuator- oder Getriebegehäuse angeordnet ist.

Zur Überwachung der Funktionen und zur Realisierung einer motorischen Betätigung ist es bekannt, eine Sensorvorrichtung vorzusehen, die mindestens einen elektrischen Sensor aufweist, der ausgebildet ist, mindestens einen aktuellen Aktuatorparameter zu erfassen und einen entsprechenden elektrischen Messwert auszugeben. Als Aktuatorparameter kann beispielsweise die Position der Aktuatorstange erfasst werden, wie beispielsweise in der
DE 10 2021 205 316 A1 beschrieben ist, wobei der Sensor ein mit der Aktuatorstange zusammenwirkendes Laufrad aufweist. Alternativ wird in der DE 199 15 105 A1 vorgeschlagen, in die Aktuatorstange eingebrachte, axial aufeinander folgende Markierungen mittels eines Sensors zur Positionserfassung der Aktuatorstange abzutasten. Zusätzlich oder alternativ können andere Parameter erfasst werden, beispielsweise die Betriebstemperatur, im Betrieb wirkende Kräfte, um eine Überlastung oder den Zustand der Aktuatorstange oder der Gleitbuchse detektieren zu können, und dergleichen.

Die bekannten Sensorvorrichtungen ermöglichen zwar eine Messung unterschiedlicher Betriebsparameter. Bezüglich Konstruktion, Fertigung und Betrieb sind die bekannten Sensoren jedoch relativ aufwendig, insbesondere wenn die Erfassung mehrerer Aktuatorparameter mit hoher Zuverlässigkeit und Messgenauigkeit gefordert ist.

Angesichts der vorangehend erläuterten Problematik ist es eine Aufgabe der vorliegenden Erfindung, eine verbesserte Messung von Aktuatorparametern zu ermöglichen.

### Darstellung der Erfindung

Diese Aufgabe wird erfindungsgemäß gelöst durch den Lenkaktuator mit den Merkmalen des Anspruchs 1 und das Verfahren zum Betrieb eines Lenkaktuators gemäß Anspruch 13. Vorteilhafte Weiterbildungen ergeben sich aus den Unteransprüchen.

Bei einem Lenkaktuator für ein Lenksystem eines Kraftfahrzeugs, umfassend eine translatorisch axial in ihrer Längsrichtung in einer Gleitbuchse verschiebbar gelagerte Aktuatorstange, eine Antriebseinrichtung, und eine zur Erfassung mindestens eines Aktuatorparameters ausgebildete Sensorvorrichtung, ist erfindungsgemäß vorgesehen, dass die Sensorvorrichtung mindestens eine in einer Faserrichtung langgestreckte optische Messfaser aufweist, in die in der Faserrichtung ein Lichtsignal einleitbar ist, und die mit der Aktuatorstange verbunden ist.

Bei der Antriebseinrichtung handelt es sich vorzugsweise um eine motorische Antriebseinrichtung. Diese weist bevorzugt einen elektrischen Motor auf und ist ausgebildet zur Einkopplung einer axialen Aktuatorkraft in die Aktuatorstange. Durch die Aktuatorkraft kann die Aktuatorstange relativ zur Gleitbuchse axial verlagert werden, um einen Lenkeinschlag eines mit der Aktuatorstange, beispielsweise über eine Spurstange verbundenen, lenkbaren Rades zu erzeugen.

Bevorzugt kann die Antriebseinrichtung von der Gleitbuchse axial beabstandet sein. Beispielsweise kann die Gleitbuchse in einem Gehäuse angebracht sein, welches auch als Aktuatorgehäuse oder Getriebegehäuse bezeichnet werden kann. Die motorische Antriebseinrichtung kann bevorzugt zumindest teilweise in das Gehäuse integriert oder daran fixiert sein.

Die Aktuatorstange ist in axialer Richtung mit einem Führungsabschnitt in der Gleitbuchse geführt, wobei zwischen den Oberflächen von Aktuatorstange und Gleitbuchse ein Gleit- bzw. Reibkontakt bestehen kann, oder auch abrollbare Wälzkörper zur Realisierung einer linearen Wälzkörperlagerung angeordnet sein können. Vorzugsweise kann die Aktuatorstange in der Gleitbuchse drehfest gelagert sein, d.h. bevorzugt formschlüssig gegen Drehung um ihre in Längsrichtung verlaufende Achse gesichert sein. Hierzu kann der Führungsabschnitt einen unrunden Querschnitt aufweisen, der in einem korrespondierenden unrunden Durchgangsquerschnitt der Gleitbuchse drehfest aufgenommen ist.

Die erfindungsgemäße optische Messfaser wird gleichbedeutend auch als Sensorfaser bezeichnet. Diese weist eine in der Faserrichtung langestreckte Lichtleitfaser auf, die beispielsweise eine Glasfaser aufweist, durch die in der Faserrichtung ein Lichtsignal hindurch geleitet werden kann. Das Messprinzip basiert auf dem physikalischen Effekt, dass auf die Messfaser einwirkende äußere Einflüsse, die mit Aktuatorparametern korreliert sind, beispielsweise Kräfte, Formänderungen, Temperaturänderungen oder dergleichen, die Lichtleitung durch die Messfaser in spezifischer Weise verändern. So kann beispielsweise eine in Faserrichtung, und/oder quer dazu durch äußere Kräfte auf die Messfaser aufgebrachte mechanische Spannung zu einer Phasenänderung und/oder Laufzeitänderung eines durch die Messfaser hindurchgeleiteten Lichtsignals führen, welche mittels einer geeigneten Messvorrichtung detektierbar und auswertbar ist.

Erfindungsgemäß ist mindestens eine derartige Messfaser mit ihrer Faserrichtung axial, d.h. in Längsrichtung parallel zur Achse, mit der Aktuatorstange verbunden. Im Betrieb wirken von außen Einflüsse ein, beispielsweise durch die in die Aktuatorstange eingekoppelte und davon übertragene Aktuatorkraft. Dadurch kann es zu einer lokalen elastischen Verformung der Aktuatorstange kommen, und entsprechend zu einer Verformung der damit verbundenen Sensorfaser, beispielsweise zu einer Dehnung, Stauchung und/oder Torsion. Diese Verformung kann mittels eines durch die Faser hindurchgeleiteten Lichtsignals erfasst und in einer Messvorrichtung ausgewertet werden. Unter Berücksichtigung der mechanischen Eigenschaften ist es möglich, die auf die Aktuatorstange und die Gleitbuchse wirkenden Kräfte zu bestimmen, die Position der Aktuatorstange zu bestimmen, und zusätzlich oder alternativ weitere direkt oder mittelbar korrelierte Aktuatorparameter zu erfassen oder abzuleiten, beispielsweise Eigenfrequenzen, Reibwerte, Temperatureffekte oder dergleichen.

Ein Vorteil der Erfindung ist, dass sowohl Kraft- als auch Positionsbestimmungen durch optische Messungen erfolgen können, wobei der konstruktive Aufwand durch die mit der Aktuatorstange verbundene optische Messfaser relativ gering ist. Eine Lichtleitfaser, die beispielsweise eine Glasfaser aufweist, kann aufgrund ihrer geringen Querschnittsabmessungen problemlos in die Aktuatorstange integriert werden. Dabei ist das zum Einsatz kommende optische Messverfahren robust und unempfindlich gegenüber elektrischen Störeinflüssen, und entsprechend besonders zuverlässig.

Es kann vorgesehen sein, dass die Messfaser im Bereich der Gleitbuchse angeordnet ist. Innerhalb der maximal möglichen axialen Verlagerung der Aktuatorstange um den insgesamt durch die Antriebseinrichtung möglichen Verschiebeweg erstreckt sich die Messfaser in dem in der Gleitbuchse gelagerten Führungsabschnitt der Aktuatorstange. Durch die eingekoppelte Aktuatorkraft kann im Bereich der Gleitbuchse eine elastische Verformung der Aktuatorstange erzeugt werden, die von der Gleitbuchse aufgenommen wird. Durch die erfindungsgemäße Messfaser kann dadurch in vorteilhafter Weise ohne zusätzliche externe Sensoren die Belastung der Aktuatorstange und auch der Gleitbuchse ermittelt werden.

Es ist bevorzugt möglich, dass die Messfaser zwischen der Gleitbuchse und der Antriebseinrichtung angeordnet ist. Dadurch, dass die die Messfaser in dem axialen Abschnitt zwischen Gleitbuchse und der Krafteinleitung durch die Antriebseinrichtung verläuft, kann die durch axialen Zug und Druck und auch durch Torsion bewirkte elastische Verformung der Aktuatorstange gemessen werden. Aus dem Betrag der eingekoppelten Aktuatorkraft und dem Betrag der elastischen Verformung kann die Position der Aktuatorstange relativ zur Gleitbuchse bestimmt werden.

Es kann vorteilhaft sein, dass eine Mehrzahl von Messfasern über den Umfang verteilt angeordnet sind. Dabei können einzelne Messfasern oder Faserbündel oder Faseranordnungen, die eine Mehrzahl von Messfasern aufweisen, in verschiedenen Umfangsabschnitten angeordnet sein. Bevorzugt können die Messfasern gleichmäßig über den Umfang verteilt angeordnet sein.

Dadurch ist es mit einem vorteilhaft geringen Aufwand möglich, mit hoher Messgenauigkeit auf die Aktuatorstange quer zur Längserstreckung, d.h. radial einwirkende Querkräfte hinsichtlich Betrag und Richtung zu messen. Auf diese Weise kann die Belastung der Aktuatorstange und der Gleitbuchse überwacht werden, und es kann auch eine Positionsbestimmung der Aktuatorstange erfolgen.

Es kann in vorteilhafter Weise vorgesehen sein, dass die Messfaser in einem Querschnitt der Aktuatorstange angeordnet ist. Die Messfaser oder eine Mehrzahl von Messfasern kann beispielsweise in der Nähe der äußeren Oberfläche in die Aktuatorstange integriert sein. Dies kann aufgrund des relativ geringen Querschnitts der Messfaser mit geringem Aufwand und ohne signifikante mechanische Schwächung der Aktuatorstange erfolgen. Beispielsweise kann eine über mindestens einen Abschnitt der Aktuatorstange axial durchgehende Nut eingebracht werden, in welcher die Messfaser eingelegt und stoffschlüssig fest fixiert wird, beispielsweise durch Verkleben.

Es ist vorgesehen, dass die Messfaser einen Eingang und einen Ausgang aufweist, wobei der Eingang und der Ausgang in entgegengesetzten axialen Endbereichen oder in demselben axialen Endbereich angeordnet sein können. Der Eingang ist ausgebildet, um mittels einer Messvorrichtung ein Lichtsignal in die Messfaser einzukoppeln, und entsprechend ist der Ausgang ausgebildet, um das Lichtsignal nach dem Durchlaufen der Messfaser aus dieser auszukoppeln und in der Messvorrichtung auszuwerten. Dadurch, dass der Eingang an dem einen axialen stirnseitigen Ende, und der Ausgang an dem anderen axialen stirnseitigen Ende angeordnet ist, kann das Lichtsignal zur Messung von der einen Seite der Aktuatorstange axial eingestrahlt und auf der anderen Seite zur Auswertung abgegriffen werden. Alternativ kann die Messfaser einen U-förmigen Verlauf aufweisen, wobei Eingang und Ausgang auf derselben axialen Stirnseite der beiden U-Schenkel angeordnet sind, die auf ihrer davon abgewandten Seite durch einen 180°-Bogen miteinander verbunden sind, bevorzugt durch einen entsprechend umgebogenen, einstückig durchgehenden Faserabschnitt. Es ist auch denkbar, dass der Eingang und der Ausgang über dieselbe optische Grenzfläche erfolgen, wobei am anderen Ende der Messfaser ein Reflektor angeordnet ist. Bevorzugt wird ein Sensor verwendet, welcher nach dem Reflexionsprinzip arbeitet. Es ist jedoch auch denkbar und möglich einen Sensor zu verwenden, welcher alternativ oder zusätzlich austretende Lichtsignale auswerten kann.

Es ist möglich, dass die Messfaser lastsensitiv und/oder deformationssensitiv und/oder temperatursensitiv ist. Durch Auswertung eines in die Messfaser eingespeisten Lichtsignals bezüglich Phasenverschiebung und/oder Laufzeit können lastabhängige mechanische Spannungen und zusätzlich oder alternativ die Betriebstemperatur erfasst werden. Der Vorteil gegenüber den im Stand der Technik bekannten Messverfahren ist, dass keine zusätzlichen Sensoren erforderlich sind, wodurch der Aufwand verringert werden kann.

Eine bevorzugte Ausführung ist, dass die Messfaser eine Mehrzahl von Messsegmenten aufweist. Dabei ist die segmentierte Messfaser durch optische Elemente, bevorzugt teildurchlässige Reflexionselemente, in eine Mehrzahl von in der Faserrichtung angeordneten optischen Segmenten segmentiert. Anders ausgedrückt sind die optischen Elemente, beispielsweise die Reflexionselemente zwischen den Messsegmenten angeordnet. Das durch die Messfaser hindurchgeleitete Lichtsignal kann dabei derart ausgewertet werden, dass durch äußere Einflüsse hervorgerufene Phasen- und/oder Laufzeitveränderungen für die einzelnen Messsegmente identifiziert und ausgewertet werden können. Dadurch, dass eine Mehrzahl von Messsegmenten vorgesehen ist, kann entsprechend eine räumlich aufgelöste Messung erfolgen, beispielsweise zur Positionsbestimmung der Aktuatorstange, oder zur Bestimmung einer lokalen Durchbiegung oder Torsion.

Es ist bevorzugt, dass eine Messvorrichtung vorgesehen ist, die mit der Messfaser verbunden ist, und von der ein optisches Eingangssignal in die Messfaser eingebbar ist, und von der ein aus der Messfaser austretendes optisches Ausgangssignal auswertbar ist. Die Messvorrichtung kann eine opto-elektronische Mess- und Auswerteeinheit aufweisen, von der ein definiertes optisches Signal, beispielsweise eine definierte Licht-Impulsfolge, erzeugt und in die Messfaser eingekoppelt werden kann, und die einen optischen Detektor umfasst, der die Phasenlage und/oder die Laufzeit des aus der Messfaser ausgekoppelten Lichtsignals auswerten kann.

In der vorgenannten Ausführung ist es vorteilhaft, dass die Messvorrichtung eine interferometrische Messeinrichtung aufweist. Diese ermöglicht eine präzise Messung der Phasenlage des optischen Messsignals, und kann bevorzugt ausgebildet sein zur Durchführung von Fasersegment-Messungen bei einer segmentierten Messfaser (Fiber Segment Interferometry FSE), wie oben beschrieben.

Es kann vorgesehen sein, dass die Antriebseinrichtung einen motorisch antreibbaren Spindeltrieb aufweist. Dabei weist die Aktuatorstange ein Spindelgewinde auf, dass sich über einen axialen Gewindeabschnitt erstreckt und in eine Spindelmutter eingeschraubt ist. Die Spindelmutter ist axial positionsfest abgestützt und durch einen Motor relativ zur Gewindeachse der Aktuatorstange drehend antreibbar. Nach dem an sich bekannten Funktionsprinzip eines Spindeltriebs, konkret eines Tauchspindeltriebs, kann eine motorisch angetriebene Drehung der Spindelmutter in eine lineare axiale Verlagerung der Aktuatorstange umgesetzt. Bevorzugt kann der Spindeltrieb als Kugelgewindetrieb (KGT) ausgebildet sein, wobei die Spindelmutter als Kugelmutter (Kugelumlaufmutter) ausgebildet ist und das Spindelgewinde als damit korrespondierendes Kugelgewinde. Dadurch wird ein effizienter Linearantrieb der Aktuatorstange ausgebildet.

Beim Einsatz eines Spindeltriebs ist die mit der Aktuatorstange verbundene Gewindespindel in der Gleitbuchse bezüglich Drehung um die Gewindeachse (Spindelachse) fixiert. Durch die erfindungsgemäße Messfaser können die zwischen dem Spindelgewinde und der Gleitbuchse eingeleiteten axial Druck- und Zugkräfte überwacht werden, und auch durch das Spindelgewinde übertragene Torsionskräfte. Dadurch kann in vorteilhafter Weise im laufenden Betrieb eine Funktionsüberwachung der Funktion des Spindeltriebs und der Gleitbuchse erfolgen. Dies ist im bekannten Stand der Technik nicht möglich.

Es ist möglich, dass die Aktuatorstange aus einem metallischen Material und/oder einem Verbundwerkstoff ausgebildet ist. Die Aktuatorstange kann ein- oder mehrteiliges metallisches Formteil aufweisen, beispielsweise ein massives oder hohles Umformteil aus Stahl. Dabei kann mindestens eine Messfaser in einer von außen eingebrachten axialen Nut fixiert sein. Es ist ebenfalls möglich, dass die Aktuatorstange zumindest abschnittweise aus einem Verbundwerkstoff ausgestaltet ist, beispielsweise aus einem harzgebundenen Faserwerkstoff, beispielsweise aus Kohlenstofffaser (CFC = carbon fiber composite). In einen derartigen Werkstoff kann die Messfaser in die Harzmatrix eingebettet sein. Dadurch wird eine vorteilhafte Leichtbauweise ermöglicht.

Bevorzugt kann der erfindungsgemäße Lenkaktuator in einem Steer-by-Wire-Lenksystem eines Kraftfahrzeugs eingesetzt sein. Dabei werden manuell eingegebene Lenkbefehle durch Drehsensoren elektronisch erfasst und in Steuerbefehle umgewandelt, die eine elektromotorische Antriebseinrichtung des Lenkaktuators ansteuern.

Die Erfindung umfasst weiterhin ein Verfahren zum Betrieb eines Lenkaktuators, umfassend eine translatorisch axial in ihrer Längsrichtung in einer Gleitbuchse verschiebbar gelagerte Aktuatorstange, eine Antriebseinrichtung und eine zur Erfassung mindestens eines Aktuatorparameters ausgebildete Sensorvorrichtung, bei dem erfindungsgemäß vorgesehen ist,
dass ein Lichtsignal als Eingangssignal in mindestens eine in einer Faserrichtung langgestreckte, mit der Aktuatorstange verbundene optische Messfaser eingegeben wird, und ein aus der Messfaser austretendes Lichtsignal als Ausgangssignal ausgewertet wird zur Bestimmung mindestens eines Aktuatorparameters.

Bei der Durchführung des Verfahrens können sämtliche vorangehend im Zusammenhang mit dem erfindungsgemäßen Lenkaktuator beschriebenen Ausführungen und Vorgehensweisen realisiert sein.

Es ist beispielsweise möglich, dass eine Laufzeit und/oder eine Phasendifferenz zwischen Eingangssignal und Ausgangssignal gemessen wird.

Bevorzugt kann vorgesehen sein, dass eine Position der Aktuatorstange relativ zur Gleitbuchse und/oder relativ zur Antriebseinrichtung, und/oder eine mechanische Spannung der Aktuatorstange und/oder der Gleitbuchse, und/oder eine Temperatur bestimmt wird. Die optischen Messsignale können in der Messvorrichtung in elektrische Signale umgesetzt werden, die zur Steuerung des Lenksystems genutzt werden. Zusätzlich können die Messsignale mit vorgegebenen Referenzwerten verglichen werden, so dass signifikante Abweichungen, die auf eine Überlastung oder eine Fehlfunktion hindeuten können, rechtzeitig erfasst werden können. Besonders bevorzugt kann dies mittels mindestens einer segmentierten Messfaser erfolgen.

Bevorzugt kann der erfindungsgemäße Lenkaktuator in einem Steer-by-Wire-Lenksystem eines Kraftfahrzeugs eingesetzt sein. Dabei werden manuell eingegebene Lenkbefehle durch Drehsensoren elektronisch erfasst und in Steuerbefehle umgewandelt, die eine elektromotorische Antriebseinrichtung des Lenkaktuators ansteuern.

### Beschreibung der Zeichnungen

Vorteilhafte Ausführungsformen der Erfindung werden im Folgenden anhand der Zeichnungen näher erläutert. Im Einzelnen zeigen:
- Fig. 1: eine schematische Darstellung eines erfindungsgemäßen Lenksystems,
- Fig. 2: einen erfindungsgemäßer Lenkaktuator in einer perspektivischen Darstellung,
- Fig. 3: eine schematisch freigestellte perspektivische Ansicht des Spindeltriebs des Lenkaktuators gemäß Fig.2,
- Fig. 4: einen Querschnitt B-B durch den Lenkaktuator gemäß Fig. 2,
- Fig. 5: einen teilweisen Längsschnitt durch den Lenkaktuator gemäß Fig. 2,
- Fig. 6: einen Querschnitt B-B gemäß Fig. 2 durch einen Lenkaktuator,
- Fig. 7: einen Querschnitt wie in Fig. 6 durch eine weitere Ausführungsform,
- Fig. 8: einen Querschnitt wie in Fig. 6 oder 7 durch eine weitere Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

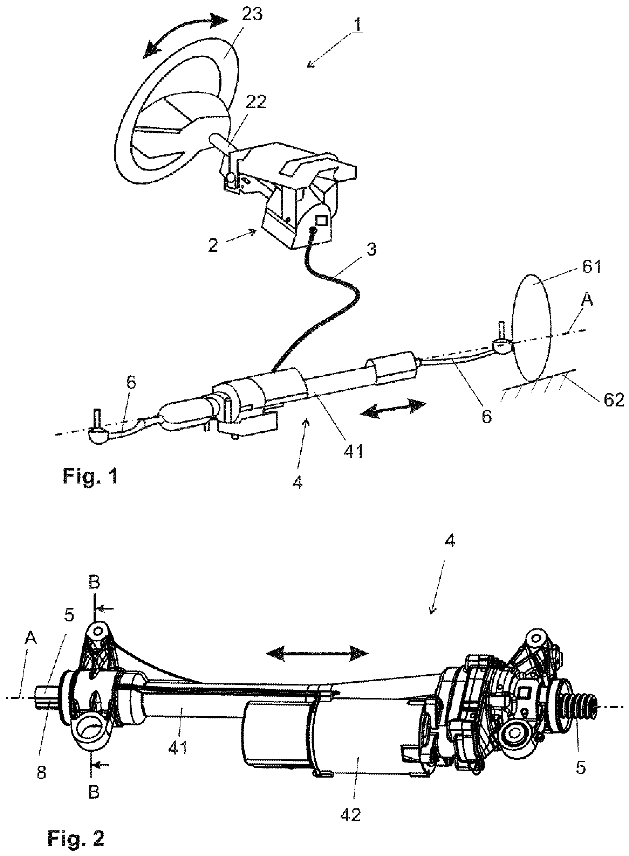

Fig. 1 zeigt schematisch ein Steer-by-wire-Lenksystem 1, welches eine Lenksäule 2 umfasst. Diese weist eine an einer nicht gezeigten Fahrzeugkarosserie montierbare Trageinheit 21 auf, von der eine Lenkspindel 22 um ihre Längsachse L drehbar gelagert ist. An ihrem bezüglich der Fahrtrichtung hinteren, fahrerseitigen Ende ist an der Lenkspindel 22 zur Eingabe manueller Lenkbefehle ein Lenkrad 23 drehfest montiert.

In der Lenksäule 2 ist eine im Einzelnen nicht dargestellte Drehwinkel- und Drehmomenterfassungssensorik untergebracht, welche einen durch Drehung des Lenkrads 23 in die Lenkspindel 22 eingebrachten Lenkbefehl in ein elektrisches Steuersignal, nämlich ein Lenksignal umsetzt.

Das Steuersignal wird über eine elektrische Steuerleitung 3 an einen erfindungsgemäßen elektrischen Lenkaktuator 4 geleitet.

Der Lenkaktuator 4 - der in Detailansichten in den Fig. 2 bis 8 gezeigt ist - weist ein Aktuatorgehäuse 41 auf, welches hier nicht dargestellte Verbindungselemente zur Anbringung an einer nicht dargestellten Fahrzeugkarosserie aufweist.

In dem Aktuatorgehäuse 41 ist eine Aktuatorstange 5, die sich entlang einer Achse A, der sogenannten Aktuatorachse A, quer zur Fahrtrichtung des Fahrzeugs erstreckt, axial, d.h. in ihrer durch diese Achse A vorgegebenen Längsrichtung verschiebbar gelagert, wie mit dem Doppelpfeil angedeutet ist.

Die beiden äußeren Enden der Aktuatorstange 5 sind jeweils über eine Spurstange 6 mit einem lenkbaren Rad 61 verbunden, so dass eine axiale Verschiebung der Aktuatorstange 5 einen Lenkeinschlag des Rades 61 relativ zur Fahrbahn 62 bewirkt.

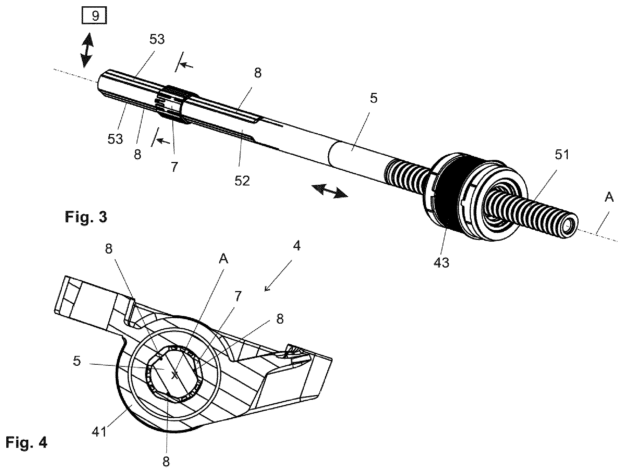

Zur Erzeugung eines Lenkeinschlags weist der Lenkaktuator 4 einen über die Steuerleitung 3 elektrisch ansteuerbaren elektro-motorischen Antrieb mit einem an dem Aktuatorgehäuse 41 angebrachten elektrischen Motor 42 auf. Von dem Motor 42 ist eine in dem Aktuatorgehäuse 41 drehend gelagerte, axial abgestützte Spindelmutter 43 drehend antreibbar, die in Fig. 3 erkennbar ist. In diese greift ein an der Aktuatorstange 5 ausgebildetes Spindelgewinde 51 ein. Auf diese Weise wird ein linearer Spindeltrieb gebildet, bei dem durch entsprechende Drehrichtung des Motors 42 die Aktuatorstange 5 relativ zur Aktuatorgehäuse 41 axial, d.h. in ihrer Längsrichtung bewegt werden kann.

Die Spindelmutter 43 kann bevorzugt als Kugelumlaufmutter ausgebildet sein.

Fig. 3 zeigt den aus der Aktuatorstange 5 zusammen mit der Spindelmutter 43 gebildeten Spindeltrieb in einer schematisch freigestellten perspektivischen Darstellung. Dabei ist die axiale Verschiebung zur Erzeugung eines Lenkeinschlags mit dem Doppelpfeil angedeutet.

Die Aktuatorstange 5 weist in ihrem von dem Spindelgewinde 51 axial abgewandten Bereich einen Führungsabschnitt 52 auf. Dieser hat einen unrunden, prismenförmigen Querschnitt, im gezeigten Beispiel mit drei gleichmäßig über den Umfang verteilten, im Wesentlichen planen Gleitflächen 53.

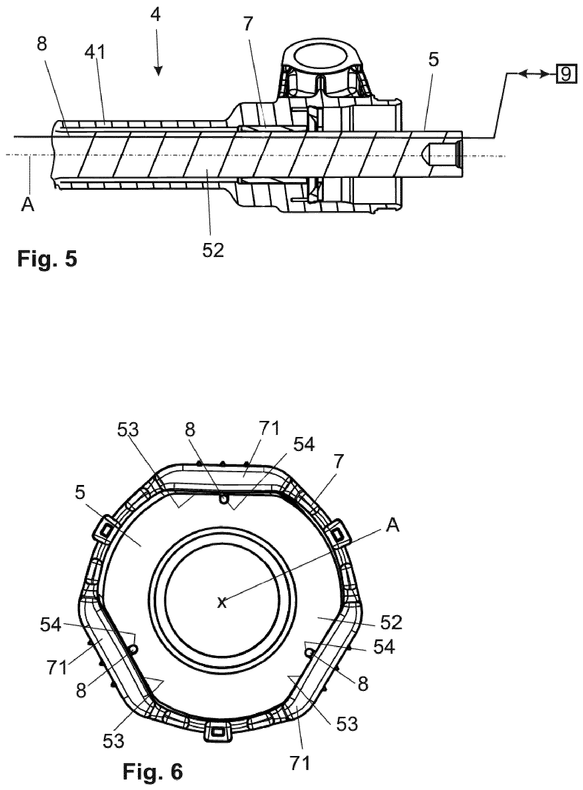

Im Bereich des Führungsabschnitts 52 ist die Aktuatorstange 5 in einer hülsenförmigen Gleitbuchse 7, die in dem Aktuatorgehäuse 41 fixiert ist, in Richtung der Aktuatorachse A relativ zum Aktuatorgehäuse 41, verschiebbar gelagert. Die Ausführung des aus der Gleitbuchse 7 und dem Führungsabschnitt 52 gebildeten Gleitlagers ist im Querschnitt B-B gemäß Fig. 2 in Fig. 4 und im Längsschnitt in Fig. 5 gezeigt.

Die Gleitbuchse 7 weist einen unrunden, an den Querschnitt der Aktuatorstange 5 angepassten Durchgangsquerschnitt auf, wobei im gezeigten Beispiel drei gleichmäßig über den Umfang verteilte Gleitelemente 71 jeweils gleitend gegen die Gleitflächen 53 der Aktuatorstange 5 anliegen. Durch den unrunden Querschnitt ist die Aktuatorstange 5 in der Gleitbuchse und damit in dem Aktuatorgehäuse 41 gegen Drehung um die Achse A gesichert.

Die Gleitbuchse 7 ist mit axialem Abstand zur Spindelmutter 43 angeordnet.

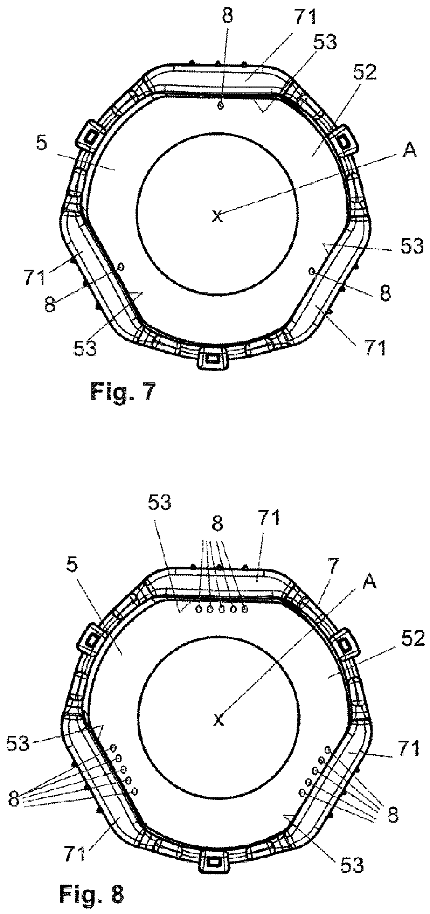

Die Aktuatorstange 5 kann im Bereich des Führungsabschnitts 52 massiv ausgebildet sein, wie schematisch in den Fig. 4 und 5 gezeigt ist, beispielsweise aus Stahl. Es ist alternativ ebenfalls möglich, dass der Führungsabschnitt 52 zumindest teilweise hohl, d.h. im Wesentlichen rohrförmig ausgebildet ist, wie in den Ausführungen, die in Fig. 6 bis 8 im Querschnitt gezeigt sind. Dabei kann der Führungsabschnitt 52 aus Stahl ausgebildet sein, wie in der Ausführung gemäß Fig. 6, oder auch aus einem Verbundwerkstoff, beispielsweise einem harzgebundenen Kohlefaser-Verbundmaterial, wie in den Ausführungen gemäß Fig. 7 und 8.

Die Gleitbuchse 7 kann bevorzugt zumindest im Bereich der Gleitelemente 71 aus einem Kunststoff ausgebildet sein oder einen solchen aufweisen.

Erfindungsgemäß sind Messfasern 8 vorgesehen, die als in Faserrichtung langgestreckte Lichtleitfasern ausgebildet sind, beispielsweise als Glasfasern. In einer vorteilhaften Ausführung kann eine Messfaser 8 in Längsrichtung durch optische Reflexionselemente segmentiert ausgebildet sein.

Die Messfaser 8 kann lastsensitiv und/oder deformationssensitiv und/oder temperatursensitiv ausgebildet sein. Das bedeutet, das ein durch die Messfaser 8 in der Faserrichtung durchlaufendes Lichtsignal in Abhängigkeit von einwirkende Kräften, Deformationen und/oder Temperaturen spezifisch verändert wird. Diese Änderungen können gemessen und ausgewertet werden.

In den gezeigten Ausführungen sind jeweils mehrere Messfasern 8 über den Umfang verteilt fest mit der Aktuatorstange 5 verbunden. Dabei erstrecken sie sich jeweils axial, parallel zur Aktuatorachse A über einen Abschnitt der Aktuatorstange 5, bevorzugt zumindest über den Führungsabschnitt 52, oder auch darüber hinaus in Richtung auf das Spindelgewinde 51 zu, wie in Fig. 3 dargestellt ist.

Jeweils mindestens eine Messfaser 8 kann bevorzugt im Umfangsbereich einer Gleitfläche 53 angeordnet sein.

In den Fig. 6, 7 und 8 ist jeweils ein vergrößerter Querschnitt B-B aus Fig. 2 gezeigt. Darin ist erkennbar, wie jeweils zumindest eine Messfaser 8 im Bereich einer Gleitfläche 53 in den Querschnitt der Aktuatorstange 5 eingebettet ist.

Die Ausführung gemäß Fig. 6 weist einen massiven oder hohlen Führungsabschnitt 52 auf, die beispielsweise aus Stahl ausgebildet sein kann. Im Bereich der insgesamt drei Gleitflächen 53 ist von außen jeweils eine axial verlaufende Nut 54 eingebracht, in der jeweils eine Messfaser 8 eingelegt und fixiert ist, beispielsweise durch Verkleben.

Fig. 7 zeigt in derselben Ansicht wie Fig. 6 eine Ausführung, bei der zumindest der Führungsabschnitt 52 einen aus einem Verbundwerkstoff ausgebildeten, rohrförmigen Hohlkörper aufweist. Im Bereich jeder der drei Gleitflächen 53 ist ähnlich wie in der Ausführung gemäß Fig. 6 jeweils eine Messfaser 8 angeordnet. Diese ist mit geringem radialen Abstand in den Verbundwerkstoff fest eingebettet, beispielsweise in der Harzmatrix eines Kohlefaser-Verbundwerkstoffs eingeschlossen.

Die in Fig. 8 gezeigte Aktuatorstange 5 ist ähnlich wie die Ausführung gemäß Fig. 7 aufgebaut. Dabei ist im Bereich jeder Gleitfläche 53 jeweils ein Faserbündel, umfassend eine Mehrzahl von Messfasern 8, angeordnet. Im gezeigten Beispiel sind dies jeweils fünf Messfasern 8, die mit geringem Abstand zur Gleitfläche 53 und parallel zueinander, in einer Sekantenfläche parallel zur Gleitfläche 53 angeordnet sind.

Mittels einer Messvorrichtung 9, die schematisch in Fig. 3 und 5 eingezeichnet ist, können Lichtsignale in die Messfasern 8 eingekoppelt werden, und nach dem Durchlaufen der Messfasern 8 ausgekoppelt, detektiert und ausgewertet werden. Hierzu kann die Messvorrichtung 9 beispielsweise eine interferometrische Messeinrichtung aufweisen, mit der Phasenunterschiede und/oder Laufzeiten der Lichtsignale erfasst und ausgewertet werden können.

Durch die Messvorrichtung 9 können die Lichtsignale am einem Ende der Messfaser 8 ein- und ausgekoppelt werden, wie schematisch in Fig. 5 angedeutet ist. Es ist auch denkbar und möglich, dass eine Messfaser U-förmig ausgebildet ist, wobei die Schenkel parallel zur Achse A angeordnet sind, so dass die Ein- und Auskopplung von Lichtsignalen stirnseitig bezüglich der freien Schenkel erfolgen kann. Es ist ebenfalls möglich, dass die Lichtsignale in ein Ende der Messfaser 8 eingekoppelt, und aus dem anderen, axial abgewandten Ende ausgekoppelt werden.

Im Betrieb wird durch die Spindelmutter 43 bei einem Lenkvorgang eine axiale Aktuatorkraft in die Aktuatorstange 5 eingekoppelt. Dadurch können Längs- und Querkräfte auftreten, die eine Belastung bzw. elastische Verformung der Aktuatorstange 5 und der damit fest verbundenen Messfasern 8 erzeugen. Mittels der Messvorrichtung 9 können die auf die Aktuatorstange 5 und die Gleitbuchse 7 wirkenden Kräfte während des Betriebs in Echtzeit gemessen und ausgewertet werden. Es ist ebenfalls möglich, anhand der Messungen die axiale Position der Aktuatorstange relativ zur Gleitbuchse 7, und damit relativ zum Aktuatorgehäuse 41 zu bestimmen.

### Bezugszeichenliste

- 1: Lenksystem
- 2: Lenksäule
- 21: Trageinheit
- 22: Lenkspindel
- 23: Lenkrad
- 3: Steuerleitung
- 4: Lenkaktuator
- 41: Aktuatorgehäuse
- 42: Motor
- 43: Spindelmutter
- 5: Aktuatorstange
- 51: Spindelgewinde
- 52: Führungsabschnitt
- 53: Gleitfläche
- 54: Nut
- 6: Spurstange
- 61: Rad
- 62: Fahrbahn
- 7: Gleitbuchse
- 71: Gleitelement
- 8: Messfaser
- 9: Messvorrichtung

- A: Aktuatorachse

## Patentansprüche

1. Lenkaktuator (4) für ein Lenksystem (1) eines Kraftfahrzeugs, umfassend eine translatorisch axial in ihrer Längsrichtung in einer Gleitbuchse (7) verschiebbar gelagerte Aktuatorstange (5), eine Antriebseinrichtung (42), und eine zur Erfassung mindestens eines Aktuatorparameters ausgebildete Sensorvorrichtung (8),
**dadurch gekennzeichnet,**
**dass** die Sensorvorrichtung mindestens eine in einer Faserrichtung langgestreckte optische Messfaser (8) aufweist, in die in der Faserrichtung ein Lichtsignal einleitbar ist, und die mit der Aktuatorstange (5) verbunden ist.

2. Lenkaktuator nach Anspruch 1, **dadurch gekennzeichnet, dass** die Messfaser (8) im Bereich der Gleitbuchse (7) angeordnet ist.

3. Lenkaktuator nach einem der vorangehenden Ansprüche, **dadurch gekennzeichnet, dass** die Messfaser (8) zwischen der Gleitbuchse (7) und der Antriebseinrichtung (42) angeordnet ist.

4. Lenkaktuator nach einem der vorangehenden Ansprüche, **dadurch gekennzeichnet, dass** eine Mehrzahl von Messfasern (8) über den Umfang verteilt angeordnet ist.

5. Lenkaktuator nach einem der vorangehenden Ansprüche, **dadurch gekennzeichnet, dass** die Messfaser (8) in einem Querschnitt der Aktuatorstange (5) angeordnet ist.

6. Lenkaktuator nach einem der vorangehenden Ansprüche, **dadurch gekennzeichnet, dass** die Messfaser (8) einen Eingang und einen Ausgang aufweist, wobei der Eingang und der Ausgang in entgegengesetzten axialen Endbereichen oder in demselben axialen Endbereich angeordnet sind.

7. Lenkaktuator nach einem der vorangehenden Ansprüche, **dadurch gekennzeichnet, dass** die Messfaser (8) lastsensitiv und/oder deformationssensitiv und/oder temperatursensitiv ist.

8. Lenkaktuator nach einem der vorangehenden Ansprüche, **dadurch gekennzeichnet, dass** die Messfaser (8) eine Mehrzahl von Messsegmenten aufweist.

9. Lenkaktuator nach einem der vorangehenden Ansprüche, **dadurch gekennzeichnet, dass** eine Messvorrichtung (9) vorgesehen ist, die mit der Messfaser (8) verbunden ist, und von der ein optisches Eingangssignal in die Messfaser (8) eingebbar ist, und von der ein aus der Messfaser (8) austretendes optisches Ausgangssignal auswertbar ist.

10. Lenkaktuator nach Anspruch 9, **dadurch gekennzeichnet, dass** die Messvorrichtung (9) eine interferometrische Messeinrichtung aufweist.

11. Lenkaktuator nach einem der vorangehenden Ansprüche, **dadurch gekennzeichnet, dass** die Antriebseinrichtung einen motorisch antreibbaren Spindeltrieb (43, 51) aufweist.

12. Lenkaktuator nach einem der vorangehenden Ansprüche, **dadurch gekennzeichnet, dass** die Aktuatorstange (5) aus einem metallischen Material und/oder einem Verbundwerkstoff ausgebildet ist.

13. Verfahren zum Betrieb eines Lenkaktuators (4), umfassend eine translatorisch axial in ihrer Längsrichtung in einer Gleitbuchse (7) verschiebbar gelagerte Aktuatorstange (5), eine Antriebseinrichtung (42, 43, 51), und eine zur Erfassung mindestens eines Aktuatorparameters ausgebildete Sensorvorrichtung (8),
**gekennzeichnet dadurch,**
**dass** ein Lichtsignal als Eingangssignal in mindestens eine in einer Faserrichtung langgestreckte, mit der Aktuatorstange (5) verbundene optische Messfaser (8) eingegeben wird, und ein aus der Messfaser (8) austretendes Lichtsignal als Ausgangssignal ausgewertet wird zur Bestimmung mindestens eines Aktuatorparameters.

14. Verfahren nach Anspruch 13, **dadurch gekennzeichnet, dass** eine Laufzeit und/oder eine Phasendifferenz zwischen Eingangssignal und Ausgangssignal gemessen wird.

15. Verfahren nach einem der Ansprüche 13 bis 14, **dadurch gekennzeichnet, dass** eine Position der Aktuatorstange (5) relativ zur Gleitbuchse (7) und/oder relativ zur Antriebseinrichtung (42, 43, 51), und/oder eine mechanische Spannung der Aktuatorstange (5) und/oder der Gleitbuchse (7), und/oder eine Temperatur bestimmt wird.

## Claims

1. Steering actuator (4) for a steering system (1) of a motor vehicle, comprising an actuator rod (5) mounted for translational axial displacement in its longitudinal direction in a sliding bush (7), a drive device (42), and a sensor device (8) designed to detect at least one actuator parameter,
**characterized in**
**in that** the sensor device has at least one optical measuring fiber (8) which is elongated in a fiber direction, into which a light signal can be introduced in the fiber direction, and which is connected to the actuator rod (5).

2. Steering actuator according to claim 1, **characterized in that** the measuring fibre (8) is arranged in the region of the sliding bush (7).

3. Steering actuator according to one of the preceding claims, **characterized in that** the measuring fibre (8) is arranged between the sliding bush (7) and the drive device (42).

4. Steering actuator according to one of the preceding claims, **characterized in that** a plurality of measuring fibres (8) is arranged distributed over the circumference.

5. Steering actuator according to one of the preceding claims, **characterized in that** the measuring fiber (8) is arranged in a cross-section of the actuator rod (5).

6. Steering actuator according to one of the preceding claims, **characterized in that** the measuring fibre (8) has an input and an output, the input and the output being arranged in opposite axial end regions or in the same axial end region.

7. Steering actuator according to one of the preceding claims, **characterized in that** the measuring fibre (8) is load-sensitive and/or deformation-sensitive and/or temperature-sensitive.

8. Steering actuator according to one of the preceding claims, **characterized in that** the measuring fiber (8) has a plurality of measuring segments.

9. Steering actuator according to one of the preceding claims, **characterized in that** a measuring device (9) is provided, which is connected to the measuring fibre (8) and from which an optical input signal can be input into the measuring fibre (8), and from which an optical output signal emerging from the measuring fibre (8) can be evaluated.

10. Steering actuator according to claim 9, **characterized in that** the measuring device (9) has an interferometric measuring device.

11. Steering actuator according to one of the preceding claims, **characterized in that** the drive device has a motor-drivable spindle drive (43, 51).

12. Steering actuator according to one of the preceding claims, **characterized in that** the actuator rod (5) is formed from a metallic material and/or a composite material.

13. Method for operating a steering actuator (4), comprising an actuator rod (5) mounted for translational axial displacement in its longitudinal direction in a sliding bush (7), a drive device (42, 43, 51), and a sensor device (8) designed to detect at least one actuator parameter,
**characterized in that**
**in that** a light signal is input as an input signal into at least one optical measuring fiber (8) which is elongated in a fiber direction and is connected to the actuator rod (5), and a light signal emerging from the measuring fiber (8) is evaluated as an output signal in order to determine at least one actuator parameter.

14. Method according to claim 13, **characterized in that** a transit time and/or a phase difference between input signal and output signal is measured.

15. Method according to one of claims 13 to 14, **characterized in that** a position of the actuator rod (5) relative to the sliding bush (7) and/or relative to the drive device (42, 43, 51), and/or a mechanical stress of the actuator rod (5) and/or the sliding bush (7), and/or a temperature is determined.

## Revendications

1. Actionneur de direction (4) pour un système de direction (1) d'un véhicule automobile, comprenant une tige d'actionneur (5) montée mobile en translation axiale dans sa direction longitudinale dans une douille de glissement (7), un dispositif d'entraînement (42), et un dispositif de détection (8) conçu pour détecter au moins un paramètre d'actionneur, **caractérisé en ce que**
que le dispositif de détection présente au moins une fibre de mesure optique (8) allongée dans une direction de fibre, dans laquelle un signal lumineux peut être introduit dans la direction de fibre, et qui est reliée à la tige d'actionneur (5).

2. Actionneur de direction selon la revendication 1, **caractérisé en ce que** la fibre de mesure (8) est disposée dans la zone de la douille de glissement (7).

3. Actionneur de direction selon l'une des revendications précédentes, **caractérisé en ce que** la fibre de mesure (8) est disposée entre la douille de glissement (7) et le dispositif d'entraînement (42).

4. Actionneur de direction selon l'une des revendications précédentes, **caractérisé en ce qu'**une pluralité de fibres de mesure (8) est répartie sur la circonférence.

5. Actionneur de direction selon l'une des revendications précédentes, **caractérisé en ce que** la fibre de mesure (8) est disposée dans une section transversale de la tige d'actionneur (5).

6. Actionneur de direction selon l'une des revendications précédentes, **caractérisé en ce que** la fibre de mesure (8) présente une entrée et une sortie, l'entrée et la sortie étant disposées dans des zones d'extrémité axiale opposées ou dans la même zone d'extrémité axiale.

7. Actionneur de direction selon l'une des revendications précédentes, **caractérisé en ce que** la fibre de mesure (8) est sensible à la charge et/ou à la déformation et/ou à la température.

8. Actionneur de direction selon l'une des revendications précédentes, **caractérisé en ce que** la fibre de mesure (8) présente une pluralité de segments de mesure.

9. Actionneur de direction selon l'une des revendications précédentes, **caractérisé en ce qu'**il est prévu un dispositif de mesure (9) qui est relié à la fibre de mesure (8) et par lequel un signal optique d'entrée peut être introduit dans la fibre de mesure (8), et par lequel un signal optique de sortie sortant de la fibre de mesure (8) peut être évalué.

10. Actionneur de direction selon la revendication 9, **caractérisé en ce que** le dispositif de mesure (9) présente un dispositif de mesure interférométrique.

11. Actionneur de direction selon l'une des revendications précédentes, **caractérisé en ce que** le dispositif d'entraînement présente un entraînement à broche (43, 51) pouvant être entraîné par un moteur.

12. Actionneur de direction selon l'une des revendications précédentes, **caractérisé en ce que** la tige d'actionneur (5) est réalisée en un matériau métallique et/ou en un matériau composite.

13. Procédé de fonctionnement d'un actionneur de direction (4), comprenant une tige d'actionneur (5) montée de manière à pouvoir se déplacer en translation axiale dans sa direction longitudinale dans une douille de glissement (7), un dispositif d'entraînement (42, 43, 51), et un dispositif de détection (8) conçu pour détecter au moins un paramètre d'actionneur,
**caractérisé en ce que**
qu'un signal lumineux est entré comme signal d'entrée dans au moins une fibre optique de mesure (8) allongée dans une direction de fibre et reliée à la tige d'actionneur (5), et qu'un signal lumineux sortant de la fibre de mesure (8) est exploité comme signal de sortie pour déterminer au moins un paramètre d'actionneur.

14. Procédé selon la revendication 13, **caractérisé en ce qu'**on mesure un temps de propagation et/ou une différence de phase entre le signal d'entrée et le signal de sortie.

15. Procédé selon l'une des revendications 13 à 14, **caractérisé en ce que** l'on détermine une position de la tige d'actionneur (5) par rapport au manchon coulissant (7) et/ou par rapport au dispositif d'entraînement (42, 43, 51), et/ou une tension mécanique de la tige d'actionneur (5) et/ou du manchon coulissant (7), et/ou une température.
